# EUROPEAN PATENT APPLICATION

(11) **EP 2 101 479 A2**
(43) Date of publication of application: **16.09.2009**
(21) Application number: 08017047.5
(22) Date of filing: 26.09.2008
(51) Int. Cl.: H04M 1/725

(54) **Information processing apparatus**

(30) Priority: 10.03.2008 JP 2008060130
(71) Applicant: Kabushiki Kaisha Toshiba, Minato-ku Tokyo (JP)
(72) Inventor: Arai, Masaaki, Tokyo (JP)
(74) Representative: HOFFMANN EITLE

(57) **Abstract**

An information processing apparatus includes: a running section configured to run a multimedia player; a time measuring section configured to measure an elapsed time from a time point when a state related to the running section is transferred to a BGM playing state; a determination section configured to determine whether or not the elapsed time measured by the time measuring section corresponds to a given time; and a stop section configured to stop the running of the multimedia player when the determining section determines that the elapsed time corresponds to the given time.

## Description

### BACKGROUND OF THE INVENTION

### Field of the Invention

The present invention relates to an information processing apparatus, and more particularly, to an information processing apparatus capable of controlling a multimedia function.

### Description of the Related Art

In recent, a mobile phone as an information processing apparatus has a communication function of simple phone call, an address book function, a mail function through a network such as a base station and internet, a browser function capable of browsing web pages, a music control function (music player function) capable of listening to audio data, and various multimedia functions such as functions capable of receiving terrestrial digital broadcasting, terrestrial digital audio broadcasting, and FM radio broadcasting.

As a technique about a mobile phone having a multimedia function, there has been known, for example, a technique capable of promptly operating a main function such as phone call in the course of playing back music which is a sub function (see JP-A-2007-189534, for instance).

In the technique described in JP-A-2007-189534, when a control unit determines that an event about a main processing unit has occurred, the control unit controls a waiting picture playing back unit and a music playing back unit which are sub processing units to pause, controls the main processing unit to perform a process corresponding to the event, and then controls the music playing back unit and the waiting picture playing back unit which have been paused to resume operation.

In a mobile phone having a multimedia function, certain current is constantly consumed in the course of running the multimedia function. For example, while a music control function (music player function) is run in a mobile phone, current is consumed by running the music player function in the course of normal music running. In the course of pausing of music playing back, when a user operates an operation key to instruct the next operation, a necessary device is normally in an active state to promptly perform the instructed operation, thereby constantly consuming current. In the course of BGM playing back to play back background music, current is consumed by running the music player function, as well as in the course of music playing back.

In the course of music playing back, since the user is actually listening to music, the user recognizes that current is consumed by running the music player function. However, the user is not actually listening music in the course of pausing of music playing back, or in the course of BGM playing back at the time of a manner mode or earphone disconnection. Accordingly, the user does not recognize that current is consumed by running the music player function.

For this reason, in the course of running the music player function, when the music playing back pauses or the BGM playing back is performed at the time of the manner mode or the earphone disconnection, current consumption caused by running the music player function occurs more than user's recognition. Accordingly, the user may complain that battery durability of the mobile phone is poor. Particularly, the BGM playing back may be started according operation sequence when the user does not intend to do. In this case, the user does not mostly recognize that current is consumed by running the music player function. For this reason, the user may further complain that the battery durability of the mobile phone is poor.

Of course, it may be possible to set that forcedly turn OFF the pausing or the BGM playing back is forcedly turned OFF by user' s setting when a predetermined time elapses. However, generally, the forced turning-OFF is not set with a default settingof themobilephone, and the forced turning-OFF operation of the pausing or the BGM playing back is not performed as long as the forced turning-OFF is not set. Accordingly, this method is not necessarily effective solution. Such a problem cannot be solved by the technique described in JP-A-2007-18953.

### SUMMARY

One of obj ects of the invention is to provide an information processing apparatus capable of reducing user's complaint that battery durability is poor due to unintended power consumption while suppressing the unintended power consumption, in the course of running a multimedia function.

According to one aspect of the invention, an information processing apparatus includes: a running section configured to run a multimedia player; a time measuring section configured to measure an elapsed time from a time point when a state related to the running section is transferred to a BGM playing state; a determination section configured to determine whether or not the elapsed time measured by the time measuring section corresponds to a given time; and a stop section configured to stop the running of the multimedia player when the determining section determines that the elapsed time corresponds to the given time.

The apparatus may further includes: a connector configured to be connectable with an earphone; and a detecting section configured to detect whether or not the earphone is connected to the external connector, wherein when the detecting section detects that the earphone is connected to the connector, the stop section continue to run the multimedia player when the determining section determines that the elapsed time corresponds to the given time.

According to another aspect of the invention, an information processing apparatus includes: a running section configured to run a multimedia player; a time measuring section configured to measure an elapsed time from a time point when a state related to the running section is transferred to a pausing state; a determination section configured to determine whether or not the elapsed time measured by the time measuring section corresponds to a given time; and a stop section configured to stop the running of the multimedia player when the determining section determines that the elapsed time corresponds to the given time.

The apparatus may further includes: a connector configured to be connectable with an earphone; and a detecting section configured to detect whether or not the earphone is connected to the external connector, wherein when the detecting section detects that the earphone is connected to the connector, the stop section continue to run the multimedia player when the determining section determines that the elapsed time corresponds to the given time.

According to still another aspect of the invention, an information processing apparatus includes: a running section configured to run a multimedia player; a time measuring section configured to measure an elapsed time from a time point when a state related to the running section is transferred to a BGM playing state; a determination section configured to determine whether or not the elapsed time measured by the time measuring section corresponds to a given time; and a display section configured to display a notification when the determining section determines that the elapsed time corresponds to the given time.

According to still another aspect of the invention, an information processing apparatus includes: a running section configured to run a multimedia player; a time measuring section configured to measure an elapsed time from a time point when a state related to the running section is transferred to a pausing state; a determination section configured to determine whether or not the elapsed time measured by the time measuring section corresponds to a given time; and a display section configured to display a notification when the determining section determines that the elapsed time corresponds to the given time.

The multimedia player may include an audio player for playing back stored audio data, a multimedia player for digital data broadcasting, a radio for terrestrial digital radio broadcasting, and a radio for FM radio broadcasting.

### BRIEF DESCRIPTION OF THE DRAWINGS

Embodiments may be described in detail with reference to the accompanying drawings, in which:
Figs. 1A and 1B are exemplary diagrams showing a configuration of appearance of a mobile phone according to an information processing apparatus of the invention;
Figs. 2A and 2B are exemplary diagrams showing a configuration of another appearance of a mobile phone according to an information processing apparatus of the invention;
Fig. 3 is an exemplary block diagram showing of an internal configuration of a mobile phone according to an information processing apparatus of the invention;
Fig. 4 is a flowchart showing a music control process in the known mobile phone;
Fig. 5 is an exemplary flowchart showing a music control process in the mobile phone shown in Fig. 3;
Fig. 6 is an exemplary flowchart showing another music control process in the mobile phone shown in Fig. 3;
Fig. 7 is an exemplary flowchart showing a music control process in the mobile phone shown in Fig. 3; and
Fig. 8 is an exemplary flowchart showing a music control process in the mobile phone shown in Fig. 3.

### DETAILED DESCRIPTION OF THE INVENTION

Hereinafter, embodiments of the invention will be described with reference to the drawings.

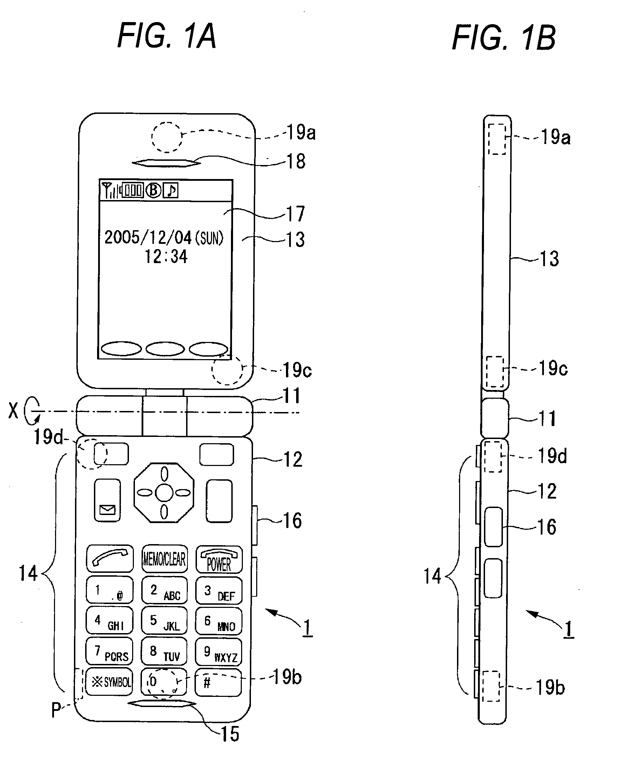

Figs. 1A and 1B show a configuration of appearance of a mobile phone 1 applicable as an information processing apparatus of the invention. Fig. 1A shows a configuration of appearance as viewed from the front when the mobile phone 1 is opened by about 180 degrees, and Fig. 1B shows a configuration of appearance as viewed from the side when the mobile phone 1 is opened.

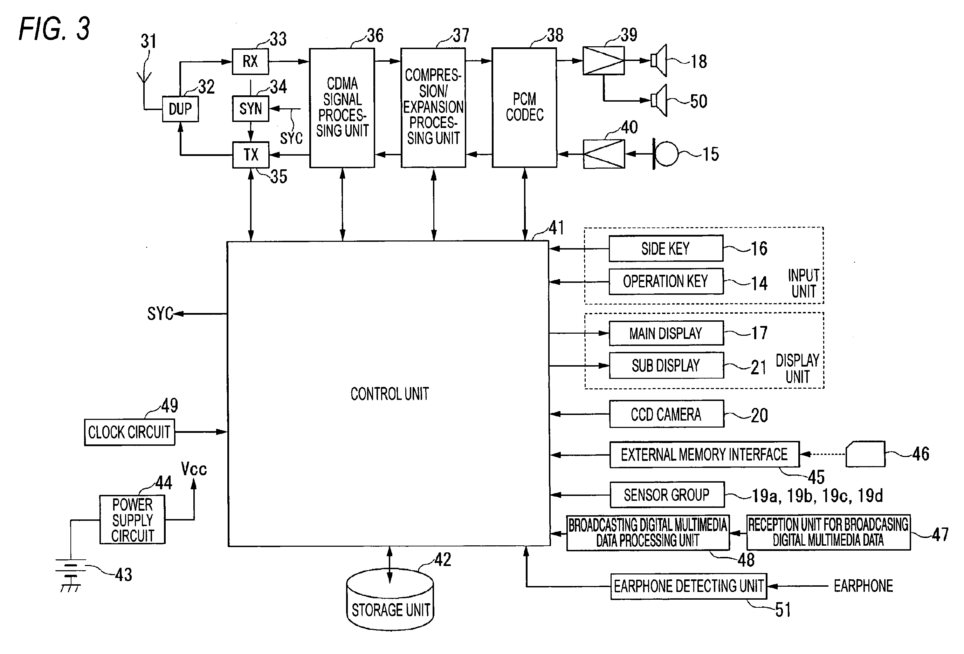

As shown in Figs. 1A and 1B, the mobile phone 1 has a first casing 12 and a second casing 13 coupled with each other by a hinge portion 11 disposed therebetween, and is foldable in a direction indicated by the arrow X by the hinge portion 11. A transmitting and receiving antenna (antenna 31 shown in Fig. 3) is provided at a predetermined position in the mobile phone 1, which transmits and receives radio waves to and from a base station (not shown) through the built-in antenna.

The first casing 12 is provided with operation keys 14 such as number keys of "0" to "9", a send key, a redial key, an end/power key, a clear key, and an e-mail key on a face thereof, and various instructions can be input using the operation keys 14.

The first casing 12 is provided with a cross key and an OK key as the operations keys 14 at the upper part thereof. A user operates the cross key, thereby moving a cursor according to the operation in up, down, left, and right directions. Specifically, various operations such as a scroll operation of a phone number list or an e-mail displayed on a main display 17 provided on the second casing 13, a page turning operation of web pages, and a moving operation of an image are performed.

Various functions can be determined by pressing the OK key down. For example, when a desired phone number is selected from a plurality of phone numbers in the phone number list displayed on the main display 17 according to the operation of the cross key instructed by the user and the OK key is pressed in an inward direction of the first casing 12, the first casing 12 determines the selected phone number to make a phone call to the selected phone number.

The first casing 12 is provided with the e-mail key on the left side of the cross key and the OK key. When the e-mail key is pressed in the inward direction of the first casing 12, it is possible to call a transmitting/receiving function of e-mail. A browser key is provided on the right side of the cross key and the OK key. When the browser key is pressed in the inward direction of the first casing 12, it is possible to browse data of web pages.

The first casing 12 is provided with a microphone 15 below the operation keys 14, and user' s voices are collected at the time of the phone call by the microphone 15. The first casing 12 is provided with a side key 16 for operating the mobile phone 1. The first casing 12 is provided with an external connector P for connecting an earphone (not shown) from the outside to the mobile phone 1. For example, the ear phone is connected to the external connector P in the course of BGM playing back of a music player.

The first casing 12 is provided with a battery pack (not shown) on a back face thereof. When the end/power key is turned on, electric power is supplied from the battery pack to each circuit unit so that the mobile phone 1 is in an operable state.

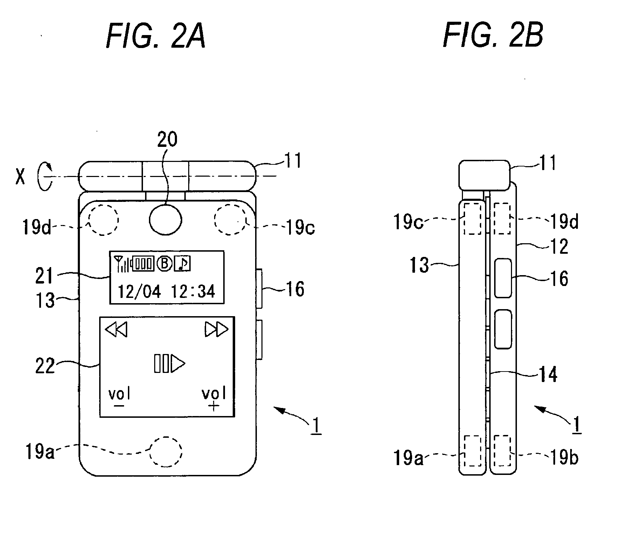

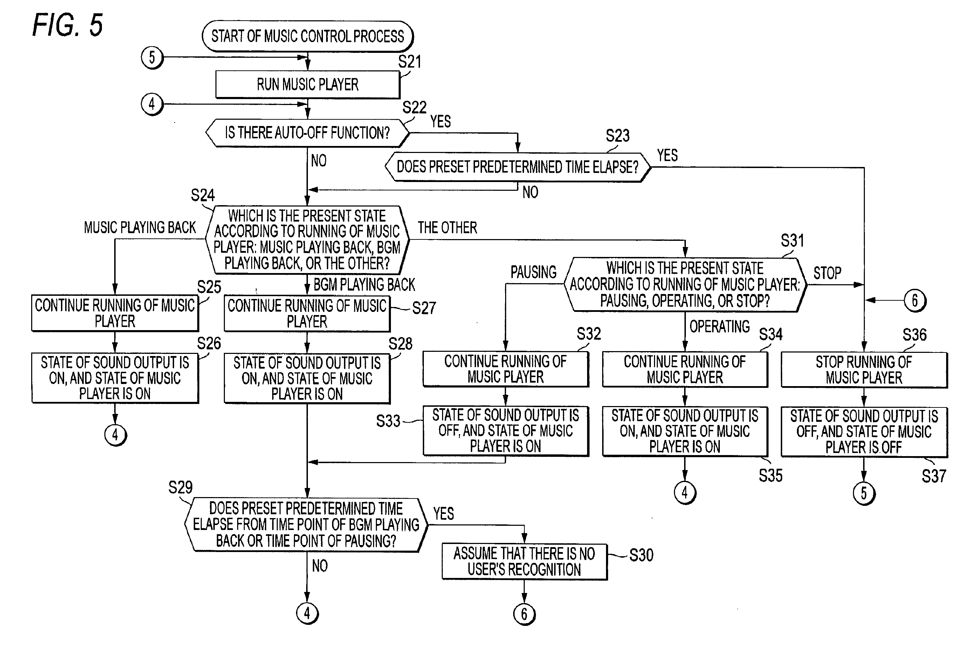

The second casing 13 is provided with the main display 17 on the front face thereof. The main display 17 can display a reception state of radio waves, an amount of remaining battery, names and phone numbers of the others registered in the phone number list, a history of calling, contents of e-mail, web pages, images taken by a Charge Coupled Device (CCD) camera (CCD camera 20 shown in Fig. 2) , contents received from an external contents server (not shown), and contents stored in a memory card (memory card 46 shown in Fig. 3). A receiver is provided at a predetermined position above the main display 17, and the user can make a voice phone call. A speaker (speaker 50 shown in Fig. 5) as sound output unit in addition to the receiver 18 is provided at a predetermined position of the mobile phone 1.

Magnetic sensors 19a, 19b, 19c, and 19d for sensing a state of the mobile phone 1 are provided at predetermined positions in the first casing 12 and the second casing 13.

Figs. 2A and 2B show a configuration of another appearance of a mobile phone 1 applicable as the information processing apparatus of the invention. A state of the mobile phone 1 shown in Figs. 2A and 2B is a state of swing from the state of the mobile phone 1 shown in Figs. 1A and 1B in the direction indicated by the arrow X. Fig. 2A shows a configuration of the appearance as viewed from the front when the mobile phone 1 is closed, and Fig. 2B shows a configuration of the appearance as viewed from the side when the mobile phone 1 is closed.

The CCD camera 20 is provided at the upper part of the second casing 13, and it is possible to take a picture of a desirable object by the CCD camera 20. A sub display 21 is provided below the CCD camera 20, and displays antenna PICT indicating a current sensitivity level of an antenna, battery PICT indicating a current amount of remaining battery of the mobile phone 1, and the present time, etc.

An electrostatic touch pad 22 is further provided below the sub display 21. Although the electrostatic touch panel 22 appears to be a single touch pad, it includes sensors (not shown) provided at a plurality of locations. When the user touches around the sensors, the sensors detect the touches and then a rewinding function, a fast-forwarding function, or operations such as decreasing or increasing the volume, playing back, and pausing are performed.

Fig. 3 shows an internal configuration of the mobile phone 1 applicable to the information processing apparatus according to the invention. A radio signal transmitted from a base station (not shown) is received by the antenna 31, and then is inputted to a reception circuit (RX) 33 through an antenna duplexer (DUP) 32. The reception circuit 33 mixes the received radio signal with a local oscillating signal output from a frequency synthesizer (SYN) 34 to perform frequency conversion (down conversion) into an intermediate frequency signal. The reception circuit 33 orthogonally demodulates the down-converted intermediate frequency signal and outputs a received base band signal. The frequency of the local signal generated from the frequency synthesizer 34 is instructed by a control signal SYC output from a control unit 41.

The received base band signal output from the reception circuit 33 is input to a CDMA signal processing unit 36. The CDMA signal processing unit 36 has a RAKE receiver (not shown) . In the RAKE receiver, a plurality of paths included in the received base band signal are despread into spread codes (i.e., the same spread code as the spread code of the spread received signal). The despread signals of the paths are shifted in phase, and then are coherent-rake synthesized. The rake-synthesized data serials are subjected to de-interleaving and channel decoding, and then 2-value data determination is performed, thereby obtaining a received packet data with a predetermined format. The received packet data is input to a compression/expansion processing unit 37.

The compression/expansion processing unit 37 is formed of a Digital Signal Processor (DSP) or the like, separates the received packet data output from the CDMA signal processing unit 36 for each media by a multiplex separation unit (not shown) , and perform a decoding process. For example, in a phone call mode, audio data corresponding to phone call voice included in the received packet data is decoded by a speech codec. In addition, for example, when video data is included in the received packet data such as a videophone mode, the video data is decoded by a video codec. When the received packet data is download contents, the download contents are expanded and then the expanded download contents are output to the control unit 41.

The digital audio signal obtained by the decoding process is supplied to a Pulse Code Modulation (PCM) codec 38. The PCM codec 38 decodes the digital audio signal output from the compression/expansion processing unit 37 in a PCM manner, and outputs the PCM-decoded analog audio data signal to a receiver amplifier 39. The analog audio signal is amplified in the receiver amplifier 39 and is output by a receiver 18.

The digital video signal decoded in the video codec by the compression/expansion processing unit 37 is input to the control unit 41. The control unit 41 controls the main display 17 to display video based on the digital video signal output from the compression/expansion processing unit 37 through a video RAM (e.g., VRAM, etc.) (not shown). The control unit 41 may control the main display 17 to display video data imaged by the CCD camera 20 as well as the received video data through a video RAM (not shown).

When the received packet data is an e-mail, the compression/expansion processing unit 37 supplies the e-mail to the control unit 41. The control unit 41 controls a storage unit 42 to store the e-mail supplied from the compression/expansion processing unit 37. According to an operation of the operation key 14 by the user, the control unit 41 reads out the e-mail stored in the storage unit 42, and controls the main display 17 to display the read-out e-mail.

In the phone call mode, a speaker's (user) voice signal (analog audio signal) input to the microphone 15 is amplified to an optimum level by a transmitter amplifier 40, and is encoded by a PCM codec 38 in a PCM manner. The PCM-encoded digital audio signal is input to the compression/expansion processing unit 37. The video signal output from the CCD camera 20 is digitalized by the control unit 41, and is input to the compression/expansion processing unit 37. The e-mail as text data generated in the control unit 41 is also input to the compression/expansion processing unit 37.

The compression/expansion processing unit 37 compresses and encodes the digital audio signal, which is output from the PCM codec 38, into a format based on a predetermined transmission data rate, thereby generating audio data. The compression/expansion processing unit 37 compresses and encodes the digital video data output from the control unit 41, thereby generating video data. The compression/expansion processing unit 37 multiplexes the audio data or the video data according to a predetermined transmission format in the multiplex separation unit (not shown) to form a packet, and then outputs the transmission packet data to the CDMA signal processing unit 36. Even when the e-mail is output from the control unit 41, the compression/expansion processing unit 37 multiplexes the e-mail into a transmission packet data.

The CDMA signal processing unit 36 performs a spectrum spread process on the transmission packet data output from the compression/expansion processing unit 37 using a spread code assigned to a transmission channel, and outputs the spectrum-spread processed signal to a transmission circuit (TX) 35. The transmission circuit 35 the spectrum-spread processed signal is modulated by digital modulation such as Quadrature Phase Shift Keying (QPSK). The transmission circuit 35 mixes the digital-converted transmission signal with a local oscillating signal generated from the frequency synthesizer 34 to perform frequency conversion (up converter) into a radio signal. The transmission circuit 35 amplifies the radio signal generated by the up converter into high-frequency signal so as to be a transmission power level instructed by the control unit 41. The high-frequency amplified radio signal is supplied to the antenna 31 through the antenna duplexer 32, and is transmitted from the antenna 31 to a base station (not shown).

The mobile phone 1 is provided with an external memory interface 45. The external memory interface 45 is provided with a slot to and from which the memory card 46 is attachable and detachable. The memory card 46 is a kind of flash memory card represented by a NAND flash memory card or a NOR flash memory card, and can write and read various data such as an image, voice, music and the like through a 10-pin terminal. The mobile phone 1 is provided with a clock circuit (timer) 49 for measuring the present time accurately.

A reception unit for broadcasting digital multimedia data 47 receives, for example, a terrestrial digital one-seg broadcasting wave or a terrestrial digital radio broadcasting wave from a broadcasting station (not shown), and supplies a Transport Stream (TS) signal based on the received terrestrial digital one-seg broadcasting wave or terrestrial digital radio broadcasting wave to a broadcasting digital multimedia data processing unit 48. When the reception unit for broadcasting digital multimedia data 47 receives the terrestrial digital one-seg broadcasting wave, the broadcasting digital multimedia data processing unit 48 separates the TS signal into Elementary Stream (ES) about audio data and video data, based on the terrestrial digital one-seg broadcasting wave received from the reception unit for broadcasting digital multimedia data 47. The separated audio data is decoded by an audio decoder (not shown) provided in the broadcasting digital multimedia data processing unit 48 in a predetermined decoding manner, the separated video data is decoded by a video decoder (not shown) provided in the broadcasting digital multimedia data processing unit 48 in a predetermined decoding manner, and the decoded audio signal and video signal are supplied to the control unit 41. In addition, the reception unit for broadcasting digital multimedia data 47 and the broadcasting digital multimedia data processing unit 48 may be applied to not only a terrestrial digital one-seg broadcasting system but also a MediaFLO system (MediaFLO is a trademark of Qualcomm, Inc.) as disclosed in US2007/0200949, which is incorporated by reference herein. An application program for the terrestrial digital one-seg broadcasting system or the MediaFLO system is referred to as "a multimedia player for digital data broadcasting", and an application program for a terrestrial digital radio broadcasting wave is referred to as "a radio for terrestrial digital radio broadcasting".

An earphone detecting unit 51 detects whether or not an earphone (not shown) is connected to an external connector P provided on the side of the first casing 12. When the connection of the earphone is detected, the earphone detecting unit 51 generates a detection signal and supplies the generated detection signal to the control unit 41.

The control unit 41 includes a Central Processing Unit (CPU), a Read Only Memory (ROM), and Random Access Memory (RAM), etc. The CPU performs various processes according to programs stored in the ROM or various application programs load from the storage unit 42 to the RAM, and generates various control signals. The CPU overall controls the mobile phone 1 by supplying the control signals. The RAM appropriately stores data or the like necessary for the various processes performed by the CPU.

The storage unit 42 includes, for example, a flash memory device that is a nonvolatile memory capable of electrical recording or removing, a Hard Disc Drive (HDD), and the like. The storage unit 42 stores the various application programs executed by the CPU of the control unit 41 or various data groups.

A power supply circuit 44 generates a predetermined operation power supply voltage Vcc based on the output power of the battery 43, and supplies the voltage to each circuit unit.

The control unit 41 has a music player function as a functional configuration according to the invention. The control unit 41 executes an application program for the music player function (music control function) to control a playing back operation, a pausing operation, a rewinding function, a fast-forwarding function, a volume-down operation, and a volume-up operation, etc. of the audio data stored in the storage unit 42. The sound based on the audio data is output from the speaker 50 or the earphone.

In a mobile phone having a multimedia function, certain current is constantly consumed in the course of running the multimedia function. For example, while a music control function (music player function) is run in a mobile phone, current is consumed by running the music player function in the course of normal music running. In the course of pausing of music playing back, when a user operates an operation key to instruct the next operation, a necessary device is normally in an active state to promptly perform the instructed operation, thereby constantly consuming current. In the course of BGM playing back (in a BGM playing state) to play back background music, current is consumed by running the music player function, as well as in the course of music playing back. In this embodiment, the BGM playing state represents a state where, when the mobile phone 1 is used to play back multimedia contents including video picture and audio, the video picture is not displayed on the main display 17 and another picture according to another function, for example, a mail function, is displayed on the main display 17.

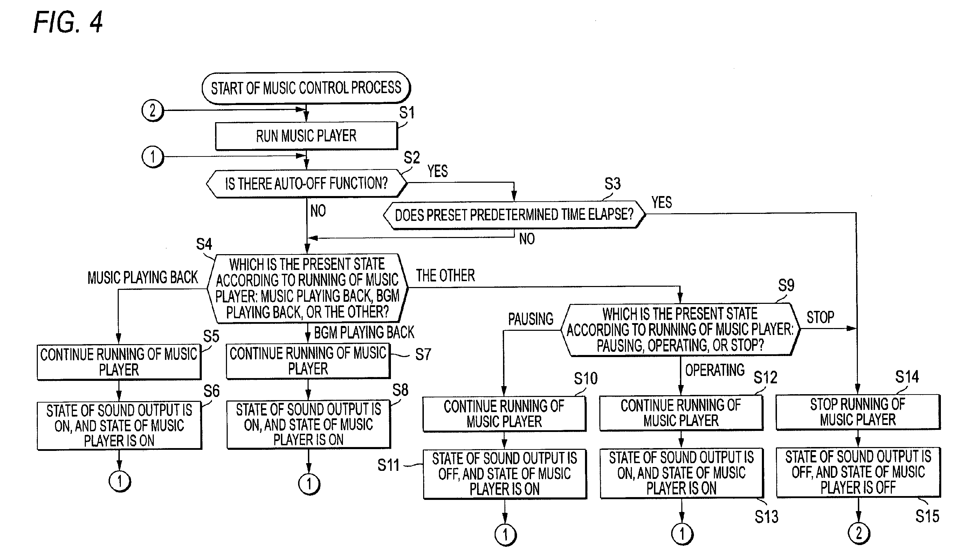

In the course of music playing back, when the user is actually listening to music, the user recognizes that current is consumed by running the music player function. However, the user is not actually listening music in the course of pausing of music playing back, or in the course of BGM playing back at the time of a manner mode or earphone disconnection. Accordingly, the user does not recognize that current is consumed by running the music player function. Hereinafter, in the known music control process, relation between power consumption caused by running the music player function and user's recognition about the power consumption will be described with reference to the flowchart shown in Fig. 4.

The known music control process in the mobile phone 1 shown in Fig. 3 will be described with reference to the flow chart shown in Fig. 4.

In Step S1, when the instruction of running the music player (musicplayer function) by user' s operating the operation keys 14 is received, the control unit 41 runs the application program for the music player stored in the ROM (not shown) of the control unit 41 or the storage unit 42. In Step S2, the control unit 41 determines whether or not an auto-OFF function of the music player is preset by operating the operation keys 14 by the user. In Step S2, when the control unit 41 determines that the auto-OFF function of the music player is not preset, the process proceeds to Step S4.

In Step S2, when the control unit 41 determines that the auto-OFF function of the music player is preset, the control unit 41 determines whether or not a preset predetermined time (e.g. 30 minutes or 1 hour) of the auto-OFF function elapses from the time of running the music player in Step S3. In Step S3, the control unit 41 determines that the preset predetermined time of the auto-OFF function does not elapse from the time of running the music player, the process proceeds to Step S4.

In Step S4, the control unit 41 determines whether the present state according to the running of the music player is music playing back, BGM playing back, or the other. In Step S4, when the control unit 41 determines that the present state according to the running of the music player is the music playing back, the control unit 41 continues the present running of the music player in Step S5. At this time, the state of the speaker 50 as sound output means is ON, and the state of the music player is ON (Step S6). The power consumption according to the running of the music player is the power consumption of the speaker 50 as the sound output means and the power consumption of the music player. In the course of the music playing back, since the user is actually listening to music, the user may recognize that current is consumed by running the music player. Therefore, the power consumption is reasonable for the user. Then, the process returns to Step S2.

In Step S4, when the control unit 41 determines that the present state according to the running of the music player is the BGM playing back, the control unit 41 continues the present running of the music player in Step S7. At this time, the state of the speaker 50 as the sound output means is ON, and the state of the music player is ON (Step S8). The power consumption according to the running of the music player function is the power consumption of the speaker 50 as the sound output means and the power consumption of the music player. In the course of the BGM playing back (in the course of the BGM playing back, the user needs to connect the earphone (not shown) to the external connector P to listen to music) at the time of a manner mode or in earphone disconnection, the user is not actually listening to music. Accordingly, the user may not recognize that current is consumed by running the music player. Therefore, in the course of the BGM playing back, when the user recognizes that current is consumed by running the music player, the power consumption is reasonable for the user. In the course of the BGM playing back, when the user does not recognize that current is consumed by running the music player, the current consumption is non-intended current consumption for the user. Then, the process returns to Step S2.

In Step S4, when the control unit 41 determines that the present state according to the running of the music player is the other (the other except the music playing back and the BGM playing back), the control unit 41 determines whether the present state according to the running of the music player is pausing, operating, or stop in Step S9. In Step S9, when the control unit 41 determines that the present state according to the running of the music player is the pausing, the control unit 41 continues the present running of the music player in Step S10. At this time, the state of the speaker 50 as the sound output means is OFF, and the state of the music player is ON (Step S11). Since the speaker 50 as the sound output means is OFF, the power consumption according to the running of the music player function is only the power consumption of the music player. However, in the course of the pausing, since the user is not actually listening to music, the user may not recognize that current is consumed by running the music player, as well as the BGM playing back. Accordingly, in the course of the pausing, when the user recognizes that current is consumed by running the music player, the power consumption is reasonable for the user. In the course of the BGM playing back, when the user does not recognize that current is consumed by running the music player, the power consumption is non-intended current consumption for the user.

In Step S9, when the control unit 41 determines that the present state according to the running of the music player is the operating (the operating of the music player), the control unit 41 continues the present running of the music player in Step S12. At this time, the state of the speaker 50 as the sound output means is ON, and the state of the music player is ON (Step S13). The power consumption according to the running of the music player function is the power consumption of the speaker 50 as the sound output means and the power consumption of the music player. In the course of the music playing back, since the user is actually operating the music player, the user recognizes that current is consumed by running the music player. Therefore, the power consumption is reasonable for the user. Then, the process returns to Step S2.

In Step S9, when the control unit 41 determines that the present state according to the running of the music player is the stop, the control unit 41 stops the present running of the music player and turns OFF the speaker 50 as the sound output means in Step S14. At this time, the state of the speaker 50 of the sound output means is OFF, and the state of the music player is OFF (Step S15). The power consumption according to the running of the music player function is 0. The user recognizes that current is not consumed by running the music player, since the running of the music player is stopped. Accordingly, the power consumption is reasonable for the user. Then, the process returns to Step S1.

In Step S3, when the control unit 41 determines that a predetermined time preset by the auto-OFF function elapses from the time point of the running of the music player, the process proceeds to Step S14. The music player is automatically stopped by the auto-OFF function. At this time, the user recognizes that current is not consumed by running the music player by automatically stopping the running of the music player after the predetermined time, since the auto-OFF function is preformed by itself. Accordingly, the power consumption of reasonable for the user.

As shown in Fig. 4, in the known music control process, when the pausing of the music playing back of the music player, or the BGM playing back at the time of the manner mode or the earphone disconnection is performed, an infinite loop of Step S2 → Step S4 → Step S7 → Step S8 → Step S2 ... or an infinite loop of Step S2 → Step S4 → Step S9 to Step S11 → Step S2 occurs as long as the user does not recognize the state. As a result, power consumption according to the running of the music player occurs more than power consumption recognized by the user, and thus the user may complain that battery durability of the mobile phone 1 is poor. Particularly, the BGM playing back may be run even when the user does not intend it according to operation sequence. In this case, since the user does not mostly recognize that current is consumed by running the music player, the user may further complain that durability of the mobile phone 1 is poor.

Of course, it may be possible to set that forcedly turn OFF the pausing or the BGM playing back is forcedly turned OFF by user' s setting (auto-OFF function) when a predetermined time elapses. However, generally, the forced turning-OFF is not set with a default setting of the mobile phone 1, and the forced turning-OFF operation of the pausing or the BGM playing back is not performed as long as the forced turning-OFF is not set. Accordingly, this method is not necessarily effective solution.

There in this embodiment, even in the case that the auto-OFF function is not set, when the pausing of the music playing back in the course of running the music player or the BGM playing back at the manner mode or the earphone disconnection is performed and then a preset predetermined time (e.g., 30 minutes or 1 hour) elapses, the running of the music player is configured to automatically stop to avoid the aforementioned infinite loop. Accordingly, it is possible to suppress power consumption that is not intended by the user in the course of running the multimedia function, and to reduce the user's complaint that the battery durability is poor according to the non-intended power consumption. Hereinafter, the music control process according to the embodiment using this method will be described.

The music control process in the mobile phone 1 shown in Fig. 3 will be described with reference to the flowchart shown in Fig. 5. In addition, the processes of Steps S21 to S28 and Step S31 to S37 shown in Fig. 5 are basically the same as the processes of Step S1 to S15 shown in Fig. 4, and the description thereof is appropriately omitted since the description is repeated.

As presupposition of the music control process in Fig. 5, when the present state according to the running of the music player is transferred to the BGM playing state or the pausing state by operation of the operation keys 14 by the user, time measurement is started by the clock circuit 49 from the time point of transferring to these states.

First, the case of avoiding the infinite loop of Step S2 → Step S4 → Step S7 → Step S8 → Step S2 ... occurring in the case of Fig. 4 will be described.

In Step S24, when the control unit 41 determines that the present state according to the running of the music player is the BGM playing back, the control unit 41 continues the present running of the music player in Step S27. At this time, the state of the speaker 50 as the sound output means is ON, and the state of the music player ON (Step S28). The power consumption according to the running of the music player function is the power consumption of the speaker 50 as the sound output means and the power consumption of the music player. However, since the user is not listening to music in the course of the BGM playing back at the time of the manner mode or the earphone disconnection, the user may not recognize that current is consumed by running the music player.

In Step S29, the control unit 41 determines whether or not a preset predetermined time (e.g., 30 minutes or 1 hour) elapses from the time point when the present state according to the running of the music player is transferred to the BGM playing back or the pausing by the use of the clock circuit 49. In Step S29, when the control unit 41 determines that the preset predetermined time (e.g., 30 minutes or 1 hour) elapses from the time point when the present state according to the running of the music player is transferred to the BGM playing back, the control unit 41 assumes that the user is not actually listening to music in the course of the BGM playing back at the time of the manner mode or the earphone disconnection and the user does not recognize that current is consumed by running the music player since the preset predetermined time elapses from the time point of transferring to the BGM playing back, in Step S30. That is, although the user once operates to perform the BGM playing back, the control unit 41 assumes that the user forgets that the present state according to the running of the music player is the BGM playing back with lapse of the time.

Then, the process proceeds to Step S36. In Step S36, the control unit 41 stops the present running of the music player and turns OFF the speaker 50 as the sound output means in Step S14. At this time, the state of the speaker 50 of the sound output means is OFF, and the state of the music player is OFF (Step S37). Then, the process proceeds to Step S21, and the processes after the Step S21 are repeatedly performed. When the running of the music player is stopped in Step S36, the control unit 41 resets the clock circuit 49 that is measuring the time so far.

Accordingly, it is possible to avoid the infinite loop of Step S2 → Step S4 → Step S7 → Step S8 → Step S2 ... occurring in the above-described case of Fig. 4, and thus it is possible to suppress the powder consumption that is not intended by the user.

In Step S29, when the control unit determines that a preset predetermined time (e. g. , 30 minutes or 1 hour) does not elapse from the time point when the present state according to the running of the music player is transferred to the BGM playing back, the process returns to Step S22 and the processes after Step S22 are repeatedly performed.

Next, the case of avoiding the infinite loop of Step S2 → Step S4 → Steps S9 to S11 → Step S2 ... occurring in the case of Fig. 4 will be described.

In Step S31, when the control unit 41 determines that the present state according to the running of the music player is the pausing, the control unit 41 continues the present running of the music player in Step S32. At this time, the state of the speaker as the sound output means is OFF, and the state of the music player is ON (Step S33). Since the speaker 50 as the sound output means is OFF, the power consumption according to the running of the music player function is only the power consumption of the music player. However, in the course of the pausing, since the user is not actually listening to music, the user may not recognize that current is consumed by running the music player, as well as the BGM playing back. Then, the process proceeds to Step S29. In Step S29, the control unit 41 determines whether or not a preset predetermined time (e.g., 30 minutes or 1 hour) elapses from the time point when the present state according to the running of the music player is transferred to the BGM playing back or the pausing by the use of the clock circuit 49. In Step S29, when the control unit 41 determines that the preset predetermined time (e.g., 30 minutes or 1 hour) elapses from the time point when the present state according to the running of the music player is transferred to the pausing, the process proceeds to Step S30. Then, the control unit 41 assumes that the user does not recognize that current is consumed by running the music player. In Step S36, the control unit 41 stops the present running of the music player and turns OFF the speaker 50 as the sound output means.

In the embodiment of the invention, the musicplayer (audio player) for playing back stored audio data is run, a time is measured from the time point when the state according to the running of the music player is transferred to the first state (e.g., BGM playing back at the time of a manner mode or earphone disconnection) or the second state (e.g., pausing), it is determined whether or not the time from the time point of transferring to the first state or the second state corresponds to a preset predetermined time. When it is determined that the time from the time point of transferring to the first state or the second state corresponds to the preset predetermine time, the running of the player is stopped.

Accordingly, when the pausing of the music playing back in the course of running the music player function or the BGM playing back at the time of the manner mode or the earphone disconnection is performed, and even when the user does not recognize that current is consumed by running the music player, for example, the user is not aware of it or forget it, the running of the music player can be forcedly stopped after the preset predetermined time elapses from the time point when the present state according to the running of the music player is transferred to the BGM playing state or the pausing state. The forced stopping operation may be performed, for example, even when the auto-OFF function is not set. Accordingly, it is suppressed that power consumption according to the running of the music player occurs more than power consumption recognized by the user, current consumption which is not intended by the user is suppressed, and it is possible to prevent user' s complaint that battery durability of the mobile phone 1 is poor. As a result, it is possible to reduce user' s complaint that battery durability is poor due to unintended power consumption while suppressing the unintended power consumption, in the course of running a multimedia function.

In the embodiment of the invention, themusicplayer (audio player) for playing back stored audio data is specifically described, but the invention is not limited to such a case and maybe applied to, for example, control processes of a multimedia player for digital data broadcasting, a radio for terrestrial digital radio broadcasting, and a radio for FM radio broadcasting, etc. The invention may be applied to control process of simultaneously running a plurality of players, in addition to the control process of running one player.

A predetermined time used at the time of the stop process of the music player maybe appropriatelymodifiedbased on user' s preference.

In the music control process described with reference to the flowchart shown in Fig. 5, when a preset predetermined time (e.g., 30 minutes or 1 hour) elapses from the time point when the present state according to the running of the music player is transferred to the BGM playing back or the pausing, the running of the music player is forcedly stopped to avoid the infinite loop and the power consumption which is not intended by the user is suppressed. Here, since the user is not actually listening to music, for example, in the course of the BGM playing back or the BGM playing back at the time of the manner mode or the earphone disconnection, it does not matter that the running of the music player is forcedly stopped. However, the user is actually listening to music in the course of the BGM playing back at the time of earphone connection. Accordingly, when the preset predetermined time elapses from the time point transferring to the BGM playing back and then the running of the music player is forcedly stopped, it is inconvenient for the user and usability is insufficient.

When it is determined whether or not the earphone is connected and it is determined that the earphone is connected, and even when a preset predetermined time elapses from the time point of transferring to, for example, the BGM playing back, it is assumed that the user recognizes that current is consumed by running the music player and the running of the music player is not stopped. Hereinafter, the music control process using this method will be described.

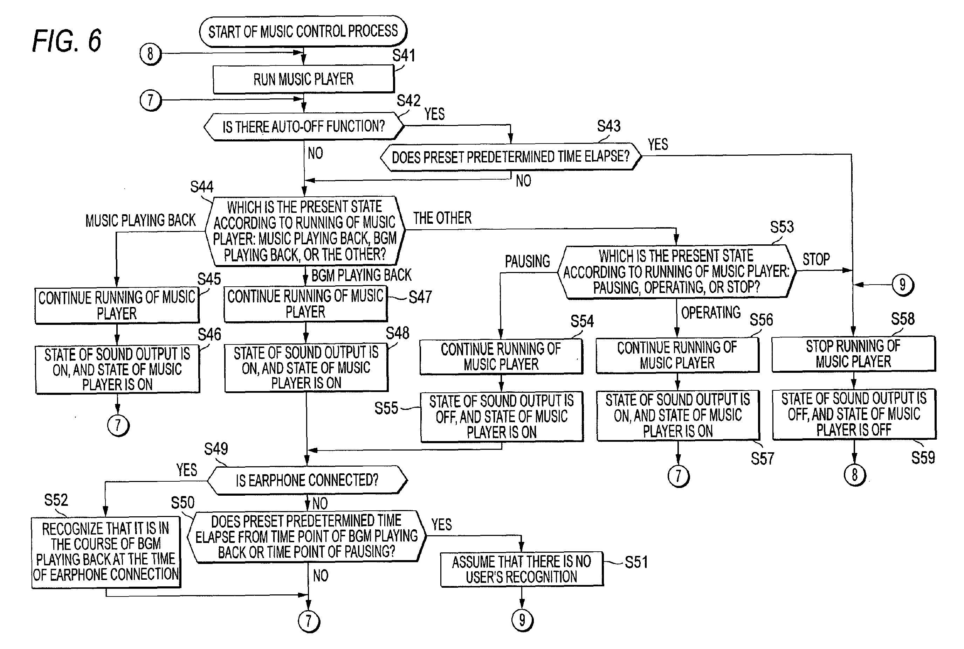

Another music control process in the mobile phone 1 shown in Fig. 3 will be described with reference to the flowchart shown in Fig. 6. The processes of Steps S41 to S48, Step S50 to S51, and Step S53 to S59 shown in Fig. 6 are basically the same as the processes of Steps S21 to S37 shown in Fig. 5, and the description thereof is omitted since the description is repeated.

To simplify the description, there is described together the case of avoiding the infinite loop of Step S2 → Step S4 → Step S7 → Step S8 → Step S2 ... occurring in the aforementioned case of Fig. 4, and the case of avoiding any one of the infinite loops of Step S2 → Step S4 → Steps S9 to S11 → Step S2 ....

In Step S49, the control unit 41 determines whether or not an earphone (not shown) is connected, based on a detection signal output from the earphone detection unit 51. In Step S49, when the control unit 41 determines that the earphone (not shown) is not connected, the control unit 41 recognizes that the present state according to the running of the music player is the BGM playing back at the time of the manner mode or the earphone disconnection, or the pausing. Then, the process proceeds to Step S50, and the processes after Step S50 are performed. When a preset predetermined time (e.g., 30 minutes or 1 hour) elapses from the time point when the preset state according to the running of the music player is transferred to the BGM playing back or the pausing, it is considered that there is no user's recognition and the running of the music player is stopped.

In Step S49, when the control unit 41 determines that the earphone (not shown) is connected, the control unit 41 recognizes that the present state according to the running of the music player is the BGM playing back at the time of the earphone connection in Step S52. At this time, in the course of the BGM playing back at the time of the earphone connection, the user is actually listening to music. Accordingly, it is assumed that the user recognizes that current is consumed by running the music player. Then, the process proceeds to Step S42 and the processes after Step S42 are repeatedly performed. For example, even when a preset predetermined time elapses from the time point of transferring to the BGM playing back, it is considered that the user recognizes that current is consumed by running the music player and the running of the music player is not stopped. In this case, the time measuring process of the clock circuit 49 is not reset. Then, when it is determined that the earphone is disconnected from the external connector P by the user and the earphone is not connected, and when the preset predetermined time elapses from the time point of transferring to the BGM playing back, it is assumed that the user does not recognize that current is consumed by running the music player and the running of the music player is stopped.

Accordingly, it is possible to prevent the running of the music player from being forcedly stopped after the preset predetermined time elapses from the time point of transferring to the BGM playing back. Therefore, it is possible to reduce user's complaint that batter durability is poor due to unintended power consumption while suppressing the unintended power consumption in the course of running a multimedia function, in consideration of usability.

In the music control process described with reference to the flowcharts shown in Fig. 5 and Fig. 6, the preset predetermined time elapses from the time point when the present state according to the running of the music player is transferred to the BGM playing back or the pausing, and then the running of the music player is forcedly stopped. However, the invention is not limited to such a case. Instead of forcedly stopping the music player, the user may be notified of the BGM playing back or the pausing. Hereinafter, the music control process using this method will be described.

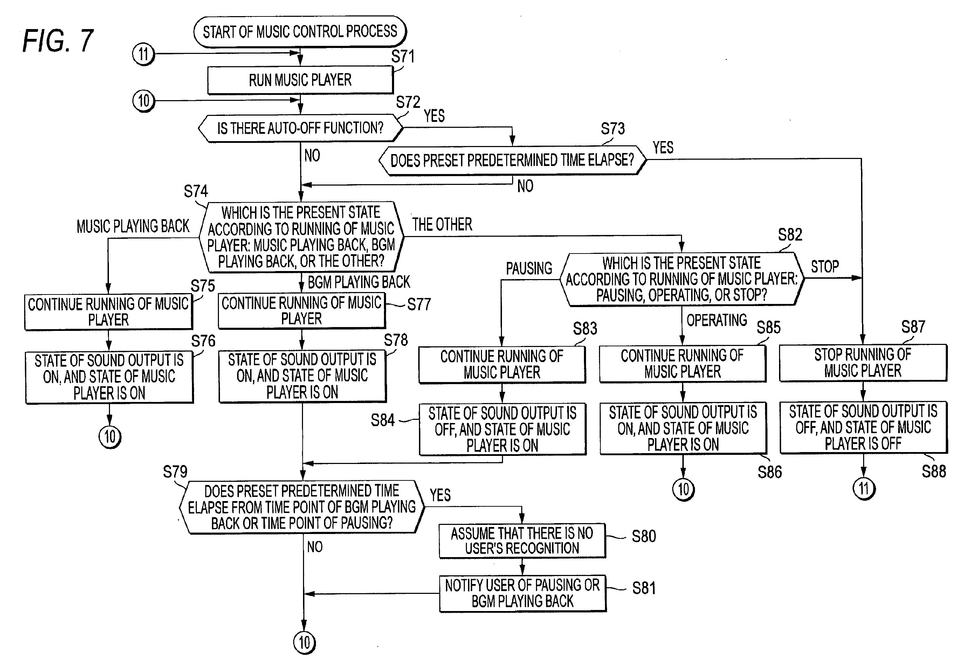

Another music control process of the mobile phone 1 shown in Fig. 3 will be described with reference to the flowchart shown in Fig. 7. The music control process shown in Fig. 7 is basically the same as the music control process shown in Fig. 5, and the description thereof is appropriately omitted.

In Step S79, when the control unit 41 determines that a preset predetermined time (e.g., 30 minutes or 1 hour) elapses from the time point when the present state according to the running of the music player is transferred to the BGM playing back or the pausing, the control unit 41 assumes that the user does not recognize that current is consumed by running the music player in Step S80. That is, although the user once operates to perform the BGM playing back or the pausing, the control unit 41 assumes that the user forgets that the present state according to the running of the music player is the BGM playing back or the pausing with lapse of the time.

In Step S81, to notify the user of the BGM playing back or the pausing, the control unit 41 controls the main display 17 to display that the present state is the BGM playing back or the pausing on the main display 17. The main display 17 displays that the present state is the BGM playing back or the pausing in a pop-up manner based on the control of the control unit 41. For example, a massage such as "now, BGM playing back" or the like is displayed.

Then, the process proceeds to Step S72. Accordingly, the user is encouraged to avoid the infinite loop described with reference to Fig. 4. Therefore, it is possible to reduce user's complaint that battery durability is poor due to unintended power consumption while suppressing the unintended power consumption, in the course of running a multimedia function.

The massage may be continuously displayed until the user performs any operation, and may be displayed every predetermined time (e.g., for 5 minutes or 10 minutes).

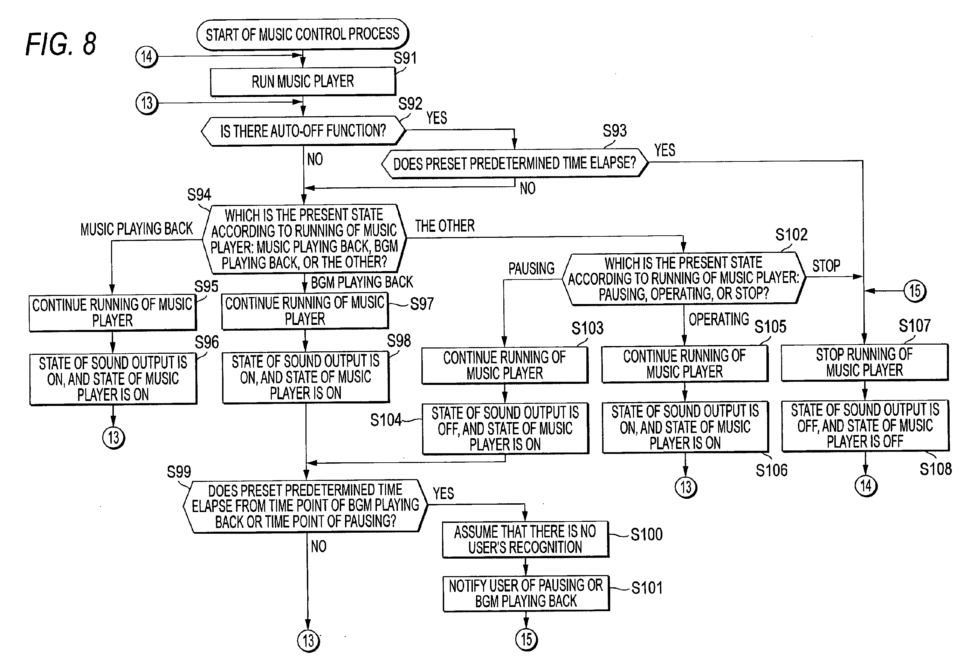

Or, for example, as shown in Fig. 8, a notification massage such as "BGM playing back is stopped" may be displayed in Step S101, while performing the stop process (process in Step S107) of the music player.

Other than the displaying of the message on the main display 17, the user may be notified in any manner. The user is notified using flickering or lighting of an LED (not shown), vibration of a vibrator, flickering or lighting of a backlight, mailing to own user' s mobile phone 1. The notifying timing may be any one of at once, at the next operation time, at every certain time, and at the power restarting time. Of course, they may be appropriately combined.

When the control unit 41 detects a low voltage about power supply from the power supply circuit 44 according to the power consumption at the time of the BGM playing back or the pausing, the power may be once OFF and then the pausing or the BGM playing back at the time of the restarting may be displayed on the main display 17 (or another display such as the sub display 21 may be used), thereby notifying the user that the power is OFF by the power consumption according to the pausing or the BGM playing back.

The invention is applicable to a Personal Digital Assistant (PDA), a personal computer, a portable game device, a portable music player, a portable video player, and other information processing apparatuses, other than the mobile phone 1.

A series of processes described in the embodiment of the invention may be performed by software or by hardware.

In the embodiment of the invention, the steps of the flowcharts represent examples of the processes performed in a time-series manner along the described sequence, but include the processes performed in a parallel or individual manner.

## Claims

1. An information processing apparatus comprising:
a running section configured to run a multimedia player;
a time measuring section configured to measure an elapsed time from a time point when a state related to the running section is transferred to a BGM playing state;
a determination section configured to determine whether or not the elapsed time measured by the time measuring section corresponds to a given time; and
a stop section configured to stop the running of the multimedia player when the determining section determines that the elapsed time corresponds to the given time.

2. The apparatus according to claim 1 further comprising:
a connector configured to be connectable with an earphone; and
a detecting section configured to detect whether or not the earphone is connected to the external connector,
wherein when the detecting section detects that the earphone is connected to the connector, the stop section continue to run the multimedia player when the determining section determines that the elapsed time corresponds to the given time.

3. An information processing apparatus comprising:
a running section configured to run a multimedia player;
a time measuring section configured to measure an elapsed time from a time point when a state related to the running section is transferred to a pausing state;
a determination section configured to determine whether or not the elapsed time measured by the time measuring section corresponds to a given time; and
a stop section configured to stop the running of the multimedia player when the determining section determines that the elapsed time corresponds to the given time.

4. The apparatus according to claim 3 further comprising:
a connector configured to be connectable with an earphone; and
a detecting section configured to detect whether or not the earphone is connected to the external connector,
wherein when the detecting section detects that the earphone is connected to the connector, the stop section continue to run the multimedia player when the determining section determines that the elapsed time corresponds to the given time.

5. An information processing apparatus comprising:
a running section configured to run a multimedia player;
a time measuring section configured to measure an elapsed time from a time point when a state related to the running section is transferred to a BGM playing state;
a determination section configured to determine whether or not the elapsed time measured by the time measuring section corresponds to a given time; and
a display section configured to display a notification when the determining section determines that the elapsed time corresponds to the given time.

6. An information processing apparatus comprising:
a running section configured to run a multimedia player;
a time measuring section configured to measure an elapsed time from a time point when a state related to the running section is transferred to a pausing state;
a determination section configured to determine whether or not the elapsed time measured by the time measuring section corresponds to a given time; and
a display section configured to display a notification when the determining section determines that the elapsed time corresponds to the given time.

7. The apparatus according to claim 1, wherein the multimedia player includes an audio player for playing back stored audio data, a multimedia player for digital data broadcasting, a radio for terrestrial digital radio broadcasting, and a radio for FM radio broadcasting.

8. The apparatus according to claim 3, wherein the multimedia player includes an audio player for playing back stored audio data, a multimedia player for digital data broadcasting, a radio for terrestrial digital radio broadcasting, and a radio for FM radio broadcasting.

9. The apparatus according to claim 5, wherein the multimedia player includes an audio player for playing back stored audio data, a multimedia player for digital data broadcasting, a radio for terrestrial digital radio broadcasting, and a radio for FM radio broadcasting.

10. The apparatus according to claim 6, wherein the multimedia player includes an audio player for playing back stored audio data, a multimedia player for digital data broadcasting, a radio for terrestrial digital radio broadcasting, and a radio for FM radio broadcasting.
